# EUROPÄISCHE PATENTANMELDUNG

(11) **EP 1 930 761 A1**
(43) Veröffentlichungstag der Anmeldung: **11.06.2008**
(21) Anmeldenummer: 06025351.5
(22) Anmeldetag: 07.12.2006
(51) Int. Cl.: G02B 23/16, G02B 7/04

(54) **Fernrohr**

(71) Anmelder: Swarovski-Optik KG, 6067 Absam i. Tirol (AT)
(72) Erfinder: Benno Miller, A-6020 Innsbruck (AT); Wilfried Thaler, A-6233 Kramsach (AT)
(74) Vertreter: Kador & Partner

(57) **Zusammenfassung**

Ein Fernrohr weist eine mit einem Stellglied (13) in Tubuslängsrichtung (5) verschiebbare Fokussieroptik (3) auf. Dazu ist an dem Tubus ein zweiarmiger Hebel (6) um eine zur Tubuslängsachst (5) senkrecht verlaufende Schwenkachse (7) verschwenkbar angelenkt. Der Hebel (6) weist einen kurzen Hebelarm (a) auf, der mit dem Stellglied (18) in Wirkverbindung steht, und einen langen Hebelarm (b), der mit der Fokussieroptik (3) in Wirkverbindung steht.

## Beschreibung

Die Erfindung bezieht sich auf ein Fernrohr mit wenigstens einem Tubus mit einer Fokussieroptik, die mit einem Stellglied in dem Tubus in Tubuslängsrichtung verschiebbar ist.

Die Fokussieroptik dient zur Einstellung der Bildschärfe bei unterschiedlichen Objektentfernungen. Sie ist dazu mit einem Getriebe entlang der Tubuslängsachse verschiebbar, meist mit einem Drehknopf als Betätigungselement. Dabei wird ein möglichst großer Fokussierweg der Fokussieroptik angestrebt, da kurze Naheinstellungen erwünscht sind. Zudem soll die optische Wirkung der Fokussieroptik möglichst gering sein, um die Abbildungsqualität des Fernrohrs nicht zu beeinträchtigen. Auch soll das Getriebe möglichst leichtgängig und spielfrei sein.

Bei monokularen Fernrohren erfolgt zum Beispiel eine direkte Umwandlung der Drehbewegung des Drehknopfes in die Axialbewegung zur Verschiebung der Fokussieroptik beispielsweise mit einer Gewindespindel als Stellglied und einer Mutter oder mittels Steuernut und Mitnehmer oder zum Beispiel über ein zwischengeschaltetes Getriebe zur Grob- und Feinfokussierung (DE 102 18 171 A1).

Bei binokularen Fernrohren kann die direkte Umwandlung der Drehbewegung des Drehknopfes in die Axialbewegung zum Beispiel über Spindel, Mutter und Schubstangen erfolgen (vergl. EP 0 358 060 B1). Dabei entspricht der Stellweg der Schubstangen dem Stellweg der Fokussieroptik.

Bei dem binokularen Fernrohr nach EP 0 961 147 B1 ist jedem Tubus ein Winkelhebel zugeordnet, der zur Übersetzung mit seinem kurzen Hebelarm an einem mit dem Drehknopf axial verschiebbaren ringförmigen Anschlag in der Gelenkbrücke und mit seinem langen Hebelarm an der Fokussieroptik angreift.

Da der Stellweg des Fokussiergetriebes dem Stellweg der Fokussieroptik entspricht, weisen Fokussiergetriebe zur direkten Umwandlung der Drehbewegung in Axialbewegung eine erhebliche Baugröße auf. Dies gilt insbesondere bei einem zwischengeschalteten Getriebe zu Grob- und Feinfokussierung, die einen so großen Platzbedarf benötigen, dass sie in binokularen Fernrohren nicht verwendbar sind. Bei binokularen Fernrohren ist zudem der Platzbedarf zur Übertragung der Bewegung des Drehknopfes zu beiden Tuben entsprechend groß, so dass zum Beispiel keine Gelenkbrücke mit einem Durchgriff gebildet werden kann.

Das Fernrohr nach EP 0 961 147 B1, das einen Durchgriff aufweist, hat sich zwar im Großen und Ganzen bewährt, jedoch werden die Winkelhebel an den ringförmigen Anschlag in der Gelenkbrücke mit Federn gedrückt. Dadurch wird nicht nur das Drehmoment des Drehknopfes erhöht, vielmehr kann zum Beispiel durch Beschädigung oder Verharzen des Fettes durch Überschreiten der Federkraft die Funktion des Fokussiergetriebes beeinträchtigt werden.

Aufgabe der Erfindung ist es, eine leichtgängiges Fokussiergetriebe mit geringem Platzbedarf, großem Fokussierweg und hoher Funktionssicherheit bereitzustellen.

Dies wird erfindungsgemäß durch das im Anspruch 1 gekennzeichnete Fernrohr erreicht. In den Unteransprüchen sind vorteilhafte Ausgestaltungen der Erfindung wiedergegeben.

Das erfindungsgemäße Fernrohr weist einen zweiarmigen Hebel auf, der an dem Tubus um eine zur Tubuslängsachse senkrecht verlaufende Achse verschwenkbar angelenkt ist.

Der zweiarmige Hebel ist vorzugsweise mit einem kurzen und einem langen Hebelarm versehen. Dabei steht der kurze Hebelarm mit dem Stellglied und der lange Hebelarm mit der Fokussieroptik in Verbindung. Durch die Hebelübersetzung, die beispielsweise 1:1,5 bis 1:3 betragen kann, wird ein entsprechend großer Fokussierweg erreicht. Zudem ist durch die Anbringung des Hebels an den Tubus der Platzbedarf für das Fokussiergetriebe außerhalb des Tubus reduziert.

Der Hebel ist vorzugsweise entsprechend dem Umfang des Tubus gekrümmt oder gebogen ausgebildet. Damit nimmt er in radialer Richtung wenig Platz in Anspruch, so dass er völlig im Inneren des Tubus angeordnet werden kann, insbesondere wenn er eine Krümmung aufweist, die konzentrisch zum Tubus bzw. zur Tubuslängsachse verläuft.

Um die erforderliche Hebelübersetzung zu erhalten, ist der gekrümmte Hebel so ausgebildet, dass, wenn er auf eine Ebene projiziert wird, die senkrecht zur Hebelschwenkachse verläuft, der durch den Hebelarm gebildete Abschnitt, der mit dem Stellglied in Wirkverbindung steht, kürzer ist, als der Abschnitt, der durch den Hebelarm gebildet wird, der mit der Fokussieroptik in Wirkverbindung steht. Auch beim gekrümmten Hebel beträgt die Hebelübersetzung beispielsweise 1:1,5 bis 1:3. Entsprechend dem Hebelgesetz wird also die Länge des Hebelarms durch den Abstand zwischen Hebelschwenkachse und Stellgliedangriffspunkt bzw. zwischen Hebelschwenkachse und Angriffspunkt des Hebels an der Fokussieroptik bestimmt.

Zur Wirkverbindung zwischen dem Hebel und der Fokussieroptik kann die Fokussieroptik in einer in dem Tubus verschiebbaren Fassung montiert sein, an der der Hebel angreift, beispielsweise an einem an der Fassung befestigten Mitnehmer. Auch kann eine gelenkige Verbindung zwischen Fassung und Stellglied vorgesehen sein. Die Wirkverbindung zwischen dem Hebel und dem Stellglied kann zum Beispiel durch eine gelenkige Verbindung zwischen Hebel und Stellglied erfolgen.

Der gekrümmte Hebel umspannt den Tubus vorzugsweise in einem Sektor von wenigstens 90°.

Der Hebel ist vorzugsweise gabelförmig ausgebildet, wobei für jeden Schenkel der Gabel ein Schwenklager vorgesehen ist. Durch sie beiden Schwenklager wird die Funktionssicherheit erhöht.

Dabei steht vorzugsweise wenigstens ein Ende der Gabel mit der Fokussieroptik in Wirkverbindung, während das Stellglied an dem Abschnitt zwischen den beiden Schwenklagern des Hebels angreift, vorzugsweise in der Mitte dieses Abschnitts.

Das Stellglied kann zum Beispiel eine Schubstange oder eine Gewindespindel sein. Die Schubstange ist dabei parallel zur Tubuslängsachse geführt und die Gewindespindel parallel zur Tubuslängsachse gelagert.

Das Stellglied kann durch ein Schraubengetriebe oder dergleichen mit einem Drehknopf oder dergleichen Betätigungselement betätigt werden. Dabei kann zum Beispiel ein Schraubengetriebe zur Umformung der Drehbewegung des Drehknopfes in die Axialbewegung des Stellgliedes vorgesehen sein. Das Getriebe zur Umformung der Drehbewegung in die Axialbewegung kann damit einfach aufgebaut und platzsparend sein.

Der Tubus kann ein Innenrohr, welches zugleich das Gehäuse für die Fokussieroptik bildet, und ein Außenrohr als Tubusgehäuse aufweisen, wobei der Hebel an der Außenseite des Innenrohrs angelenkt ist. Um den Hohlraum zur Aufnahme des Hebels in dem Tubus zu bilden, kann das Außengehäuse eine entsprechende Innenausnehmung aufweisen, bzw. in einem entsprechenden Abstand vom Innenrohr angeordnet sein.

Das erfindungsgemäße Fernrohr kann sowohl als monokulares wie als binokulares Fernrohr ausgebildet sein. Aufgrund seiner geringen Baugröße ist es vor allem für binokulares Fernrohre hervorragend geeignet. Bei einem binokularen Fernrohr kann nämlich das Getriebe in einer relativ schmalen Gelenkbrücke zwischen den beiden Tuben untergebracht und mit einem Drehknopf in der Gelenkbrückenachse betätigt werden. Damit kann ein binokulares Fernrohr mit einem Durchgriff zwischen zwei Gelenkbrücken gebildet werden.

Nachstehend ist eine Ausführungsform der Erfindung anhand der beigefügten Zeichnung näher erläutert. Darin zeigen:
Figur 1 eine Seitenansicht des objektivseitigen Teils des Tubus eines Fernrohres mit abgenommenen Gehäuse;
Figur 2 eine Draufsicht auf das Tubusteil nach Figur 1; und
Figur 3 einen Schnitt entlang der Linie III-III nach Figur 2.

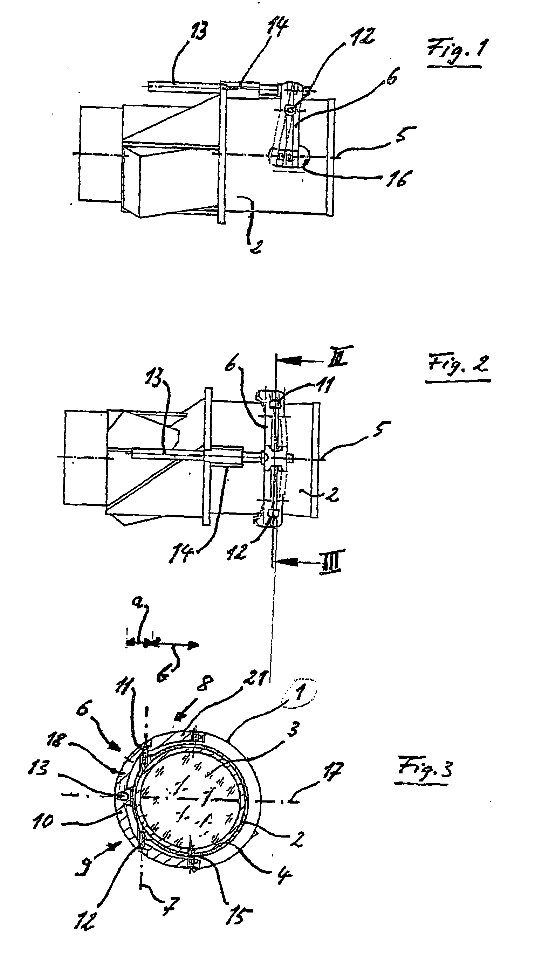

Danach weist ein Fernrohr in einem Tubusgehäuse, von dem in Figur 3 nur die Innenwand 1 dargestellt ist, ein Innenrohr 2 auf, das das Gehäuse für die Fokussieroptik 3 in einer Fassung 4 bildet. Zur Verschiebung der Fokussieroptik 3 in dem Innengehäuse 2 entlang der Tubuslängssachse 5 ist ein Hebel 6 an dem Innengehäuse 2 um eine Schwenkachse 7 verschwenkbar angelenkt, welche senkrecht zur Tubuslängsachse 5 verläuft.

Der Hebel 6 ist konzentrisch zum Tubus gekrümmt oder gebogen ausgebildet, und zwar kreisbogenförmig mit der Tubuslängsachse 5 als Kreismittelpunkt. Der Hebel 6 umspannt dabei das Innenrohr 2 in einem Sektor von etwa 180°. Der Hebel 6 ist gabelförmig ausgebildet, das heißt er weist zwei Schenkel 8, 9 auf, wobei jeder Schenkel 8, 9 mit einem Schwenklager 11, 12 an dem Innengehäuse 2 gelagert ist, welche die Hebelschwenkachse 7 bilden.

Der Hebel 6 wird mit einer Schubstange 13 als Stellglied betätigt, welche in einer Führung 14 an dem Innengehäuse 2 parallel zur Tubuslängsachse 5 geführt ist. Der Hebel 6 wird seinerseits durch ein nicht dargestelltes Getriebe oder dergleichen Betätigungsmechanismus betätigt, der zum Beispiel einen Drehknopf als Betätigungselement aufweist.

Die Schubstange 13 ist mit dem Hebel 6 in der Mitte zwischen den beiden Schwenklagern 11, 12 verbunden. Das Ende des Schenkels 9 des gabelförmigen Hebels 6 greift an einem Mitnehmerstift 15 an der Fassung 4 der Fokussieroptik 3 an. Zum Angriff des Hebels 6 an dem Mitnehmerstift 15 weist das Innengehäuse 2 eine schlitzförmige Öffnung 16 auf.

Mit dem Hebel 6 wird der Stellweg des Stellgliedes 13 in einen größeren Fokussierweg übersetzt.

Dazu ist der Hebelarm des Hebels 6, an dem das Stellglied 13 angreift, kürzer ausgebildet als der Hebelarm, der mit der Fokussieroptik in Wirkverbindung steht. Bei dem gekrümmten, gabelförmigen Hebel 6 gemäß Figur 1 bis 3 wird diese Hebelübersetzung dadurch erreicht, dass, wenn ein Schenkel, beispielsweise wie in Figur 3 gezeigt, der Schenkel 8 auf die Ebene 17 projiziert wird, die senkrecht zur Schwenkachse 9 verläuft, der durch den stellgliedseitigen Hebelarm 18 in der Projektionsebene 17 gebildete Abschnitt eine Länge a aufweist, die kürzer ist als die Länge b des Abschnitts der durch Projektion des fokussieroptikseitigen Hebelarmes 21 auf die Projektionsebene 17 erhalten wird. So kann das Hebelübersetzungsverhältnis a:b beispielsweise 1:2 betragen.

## Patentansprüche

1. Fernrohr mit wenigstens einem Tubus mit einer Fokussieroptik (3), die mit einem Stellglied (13) in dem Tubus in Tubuslängsrichtung verschiebbar ist, **dadurch gekennzeichnet, dass** an dem Tubus ein zweiarmiger Hebel (6) um eine zur Tubuslängsachse (5) senkrecht verlaufende Schwenkachse (7) verschwenkbar angelenkt ist, der mit seinem einen Hebelarm mit dem Stellglied (13) und mit seinem anderen Hebelarm mit der Fokussieroptik (3) in Wirkverbindung steht.

2. Fernrohr nach Anspruch 1, **dadurch gekennzeichnet, dass** der Hebel (6) an der Innenseite (1) des Tubusgehäuses angeordnet und gekrümmt ausgebildet ist.

3. Fernrohr nach Anspruch 2, **dadurch gekennzeichnet, dass** bei Projektion des gekrümmten Hebels (6) auf eine Ebene (17), die senkrecht zur Hebelschwenkachse (7) verläuft, der Hebelarm (18), mit dem das Stellglied (13) in Wirkverbindung steht, eine kürzere Länge (a) aufweist, als der Hebelarm (21), der mit der Fokussieroptik (3) in Wirkverbindung steht.

4. Fernrohr nach einem der vorstehenden Ansprüche, **dadurch gekennzeichnet, dass** die Fokussieroptik (3) eine Fassung (4) aufweist, an der der eine Hebelarm (21) angreift.

5. Fernrohr nach einem der vorstehenden Ansprüche, **dadurch gekennzeichnet, dass** der Hebel (6) gabelförmig ausgebildet ist, wobei für jeden Schenkel (8, 9) der Gabel ein Schwenklager (11, 12) vorgesehen ist.

6. Fernrohr nach Anspruch 5, **dadurch gekennzeichnet, dass** das Stellglied (13) mit dem Abschnitt (10) des gabelförmigen Hebels (6) zwischen den beiden Schwenklagern (11, 12) in Wirkverbindung steht.

7. Fernrohr nach einem der vorstehenden Ansprüche, **dadurch gekennzeichnet, dass** das Stellglied (13) durch eine Schubstange gebildet wird, die parallel zur Tubuslängsachse (5) geführt ist und an dem Hebel (6) gelenkig angreift.

8. Fernrohr nach einem der vorstehenden Ansprüche, **dadurch gekennzeichnet, dass** der Tubus ein Innengehäuse (2), in dem die Fokussieroptik (3) verschiebbar gelagert ist, und ein Außengehäuse (1) aufweist und der Hebel (6) auf der Außenseite des Innengehäuses (2) zwischen Innengehäuse (2) und Außengehäuse (1) angelenkt ist.

9. Fernrohr nach Anspruch 8, **dadurch gekennzeichnet, dass** das Innenrohr (2) zum Angriff des Hebels (6) an der Fokussieroptik (3) eine Öffnung (16) aufweist.
